# EUROPÄISCHE PATENTSCHRIFT

(11) **EP 2 524 857 B1**
(45) Veröffentlichungstag und Bekanntmachung des Hinweises auf die Patenterteilung: **04.11.2015**
(21) Anmeldenummer: 11166978.4
(22) Anmeldetag: 20.05.2011
(51) Int. Cl.: B62D 63/02, B62D 33/04

(54) **System mit Einzelmodulen zur Bildung eines Kofferaufbaus**
System with individual modules for forming a box body
Système doté de modules individuels pour la formation d'un ensemble de coffre

(43) Veröffentlichungstag der Anmeldung: 21.11.2012
(73) Patentinhaber: Schmitz Cargobull AG, 48341 Altenberge (DE)
(72) Erfinder: Dorr, Christoph, 46514, Schermbeck (DE)
(74) Vertreter: Cohausz & Florack

(56) Entgegenhaltungen:
- EP-A1- 0 607 575
- DE-A1- 1 484 108
- DE-A1- 1 914 997
- US-A- 3 992 834
- US-A- 4 099 887

## Beschreibung

Die Erfindung betrifft ein System mit wenigstens zwei Einzelmodulen zur Bildung eines Kofferaufbaus eines Nutzfahrzeugs, insbesondere eines Transporters, eines Lastkraftwagens, eines Anhängers und/oder eines Aufliegers, wobei an einer Schmalseite eines ersten Einzelmoduls ein Nutprofil vorgesehen ist, wobei an einer Schmalseite eines zweiten Einzelmoduls ein Federprofil vorgesehen ist, wobei das Nutprofil und das Federprofil zum formschlüssigen Verbinden miteinander in einer ersten Stellung vorgesehen sind, in der das erste Einzelmodul und das zweite Einzelmodul im Wesentlichen parallel zueinander ausgerichtet sind und wobei das Nutprofil und das Federprofil zum formschlüssigen Verbinden in einer zweiten Stellung formschlüssig vorgesehen sind, in der das erste Einzelmodul und das zweite Einzelmodul im Wesentlichen senkrecht zueinander ausgerichtet sind.

Kofferaufbauten von Nutzfahrzeugen der genannten Art werden insbesondere für den Transport gekühlter Güter, wie Lebensmittel, oder von Gütern eingesetzt, die gegen äußere Einflüsse, wie insbesondere Nässe, geschützt werden sollen. Man spricht daher auch von Kühltransporten oder Trockentransporten. Die Kofferaufbauten von Nutzfahrzeugen weisen typischerweise zwei Seitenwandpaneele, ein Stirnwandpaneel und ein Dachpaneel auf, die auf einer Bodenstruktur montiert sind. Die Rückseiten der Kofferaufbauten sind meist durch Türen oder Rolltore verschlossen.

Die einzelnen Paneele weisen zwei äußere, die Außenhaut bildende, Decklagen auf, zwischen denen eine Kernlage vorgesehen ist, die meist aus einem geschäumten Kunststoff besteht. Man unterscheidet dabei die innere, dem Inneren des Kofferaufbaus zugeordnete und die äußere, dem Äußeren des Kofferaufbaus zugeordnete Decklage. Wegen des mehrschichtigen Aufbaus werden die Paneele häufig auch als Sandwichpaneele bezeichnet.

Man unterscheidet Kofferaufbauten, bei denen die einzelnen Paneele einteilig oder mehrteilig ausgebildet sind. Kofferaufbauten aus einteiligen Paneelen werden in der Regel vollständig an einem Ort gefertigt und montiert. Wenn der Kofferaufbau aus mehrteiligen Paneelen gefertigt wird, können die einzelnen Teile der Paneele an einem Ort vorgefertigt und anschließend zu dezentralen Montageorten transportiert werden. Erst an diesen dezentralen Montageorten erfolgt der Zusammenbau der Paneele und schließlich des Kofferaufbaus aus einzelnen vorkonfigurierten Teilen. Man spricht bei den einzelnen Teilen eines Paneels auch von Einzelmodulen, die zu sogenannten Komponenten zusammengefügt werden, unter denen die entsprechenden Paneele des Kofferaufbaus verstanden werden. Die Einzelmodule sind dabei möglichst gleichartig ausgebildet.

Auf diese Weise können aus einer Reihe vorkonfigurierter Einzelmodule, ähnlich eines Baukastensystems, einzelne Bausätze zusammengestellt werden, aus denen sich an dezentralen Montageorten die Kofferaufbauten zusammensetzen lassen. Da lediglich kompakte Bausätze und nicht etwa vollständige Paneele zu den dezentralen Montageorten verschickt werden müssen, hält sich der logistische Aufwand bei diesem Vorgehen in Grenzen.

Einzelmodule zur Bildung von Kofferaufbauten sind beispielsweise aus der EP 0 607 575 A1 bekannt. Die Einzelmodule weisen zwei äußere Decklagen und eine Kernlage aus einem geschäumten Kunststoff auf. Die Einzelmodule sind rechteckig ausgebildet und weisen folglich vier umlaufende Schmalseiten auf, an denen die Einzelmodule mit weiteren Bauelementen des Kofferaufbaus verbunden werden.

Zur Bildung der Paneele werden mehrere Einzelmodule miteinander verbunden. Dazu sind an einem Paar von einander gegenüberliegenden Schmalseiten eines Einzelmoduls ein Nutprofil und ein Federprofil vorgesehen. Diese können mit gleichartigen Profilen weiterer Einzelmodule durch Ineinanderstecken in einer gemeinsamen Ebene miteinander verbunden werden. Es werden bei dem bekannten Kofferaufbau auf diese Weise so viele Einzelmodule miteinander verbunden, bis die entsprechende Komponente in Form eines Seitenwandpaneels, eines Stirnwandpaneels oder eines Dachpaneels die gewünschte Länge aufweist.

Die einzelnen Komponenten des Kofferaufbaus werden dann über zusätzliche Kantenprofile miteinander verbunden. Die Kantenprofile erstrecken sich über die gesamte Höhe, über die gesamte Länge oder über die gesamte Breite des Kofferaufbaus. Die Kantenprofile bilden auf diese Weise einen Grundrahmen, wobei die Komponenten in Form von Seitenwandpaneelen, eines Stirnwandpaneels und eines Dachpaneels jeweils in entsprechende Kantenprofile eingesteckt und dort verklebt werden. Wenn nötig, kann die Stabilität des Kofferaufbaus durch zusätzliche Verschraubungen erhöht werden. Da die verschiedenen Komponenten mit den Rändern der Einzelmodule in die Kantenprofile eingesteckt werden, bedürfen die Einzelmodule an den entsprechenden Schmalseiten keiner Nutprofile oder Federprofile. Die Nutprofile und Federprofile sind lediglich an einem Seitenkantenpaar der Einzelmodule vorgesehen.

Nachteilig an den bekannten Systemen zur Bildung eines Kofferaufbaus zur dezentralen Montage ist die Anzahl der benötigten unterschiedlichen Bauteile. Wenn viele verschiedene Nutzfahrzeugtypen auf die bekannte Weise mit Kofferaufbauten versehen werden sollen, bedarf es einer großen Zahl sich unterscheidender vorkonfigurierter Einzelteile. Aus der großen Zahl von sich unterscheidenden Einzelteilen werden dann die Einzelteile ausgesucht und zu einem Bausatz zusammengestellt, die für die Fertigung eines bestimmen Kofferaufbaus benötigt werden. Dies ist erforderlich, weil die relevanten Abmessungen von Nutzfahrzeug zu Nutzfahrzeug stark variieren. Aus der großen Zahl von sich unterscheidenden Bauteilen des resultierenden Baukastensystems ergibt sich ein erhöhter Aufwand für Lagerhaltung und Logistik.

Ein weiterer Nachteil der bestehenden Kofferaufbauten besteht darin, dass die Kantenprofile sehr lang sind, was zu logistischen Problemen führt, wenn die Kofferaufbauten an dezentralen Montageorten aus vorkonfigurierten Bausätzen zusammengesetzt werden sollen. Es kann zwar vorgesehen sein, dass auch die Kantenprofile erst an den dezentralen Montageorten aus mehreren Teilprofilen zusammengesetzt werden. Allerdings führt dies zu einem erhöhten fertigungstechnischen Aufwand, da zunächst die Kantenprofile zusammengesetzt und anschließend die Komponenten des Kofferaufbaus mittels der Kantenprofile verbunden werden müssen.

In der US 3,992,834 A sind Konstruktionselemente mit einem Federprofil und einem Nutprofil an gegenüberliegenden Schmalseiten bekannt. Die Profile sind etwa um 45° geneigt und erlauben die Verbindung der Konstruktionselemente in zwei unterschiedlichen Stellungen. Zudem ist aus der DE 1 484 108 A1 ein System aus Einzelmodulen der eingangs genannten Art bekannt. Bei diesem System weist jedoch die Verbindung der Einzelmodule keine zufriedenstellende Stabilität auf. Zudem ist das Fügen der Verbindung recht umständlich und aufwendig.

Der vorliegenden Erfindung liegt daher die Aufgabe zugrunde, das eingangs genannte und zuvor näher beschriebene System derart auszugestalten und weiterzubilden, dass eine stabilere Verbindung der Einzelmodule bereitgestellt werden kann, die einfacher und zuverlässiger zu fügen ist.

Diese Aufgabe ist bei einem Paneelsystem mit den Merkmalen des Oberbegriffs von Anspruch 1 dadurch gelöst, dass das Nutprofil am Nutgrund und das Federprofil an dem dem Nutgrund zugewandten Abschnitt etwa um 45° zur Ebene des jeweiligen Einzelmoduls geneigte Anschlagflächen aufweisen, die in der ersten Stellung und der zweiten Stellung zusammenwirken und dass das Nutprofil und das Federprofil dazu ausgebildet sind, in der ersten Stellung und der zweiten Stellung über eine Schnappverbindung selbstpositionierend miteinander verbunden zu werden.

Die Erfindung hat erkannt, dass auf Kantenprofile gänzlich verzichtet werden kann, wenn das Nutprofil und das korrespondierende Federprofil des Systems dazu ausgebildet sind, in zwei unterschiedlichen Ausrichtungen formschlüssig miteinander verbunden werden zu können. In der ersten Ausrichtung sind die beidem verbundenen Einzelmodule im Wesentlichen in einer gemeinsamen Ebene angeordnet, während die verbundenen Einzelmodule in der zweiten Ausrichtung in im Wesentlichen senkrecht zueinander ausgerichteten Ebenen angeordnet sind.

Bei den Einzelmodulen kann es sich also um Einzelmodule der gleichen Komponente, d.h. des gleichen Paneels, handeln. Dann sind die miteinander verbundenen Einzelmodule in einer gemeinsamen Ebene, d.h. parallel zueinander, angeordnet. Die Einzelmodule können aber auch unterschiedlichen Komponenten angehören. In diesem Fall sind die beiden Einzelmodule über Eck miteinander verbunden, wobei die Einzelmodule im Wesentlichen senkrecht zueinander ausgerichtet sind, da Kofferaufbauten typischerweise eine rechteckige Gestalt aufweisen. Bei einer Verbindung über Eck wird folglich eine solche Verbindung verstanden, bei der eine Kante oder wenigstens ein Teil einer Kante des Kofferaufbaus gebildet wird.

Es sind also weder für das Verbinden der Einzelmodule einer Komponente noch für das Verbinden der Einzelmodule unterschiedlicher Komponenten bzw. der unterschiedlichen Komponenten untereinander zusätzliche Kantenprofile oder dergleichen erforderlich.

Damit Einzelmodule sowohl mit wenigstens einem weiteren Einzelmodul derselben Komponente, als auch mit wenigstens einem Einzelmodul einer anderen Komponente desselben Kofferaufbaus verbunden werden können, bietet es sich an, wenn jedes Einzelmodul an mehreren Schmalseiten ein Nutprofil und/oder ein Federprofil aufweist. Insbesondere sind an einem einander gegenüberliegenden Paar von Schmalseiten ein Nutprofil und ein Federprofil vorgesehen. Derartig ausgebildete Einzelmodule können dann beispielsweise in einer gemeinsamen Ebene und/oder über Eck miteinander verbunden werden. Bei den mit Nutprofil und Federprofil versehenen Schmalseiten handelt es sich vorzugsweise um das Paar längerer Schmalseiten.

Um Einzelmodule nicht nur mit Einzelmodulen derselben Komponente und einer angrenzenden Komponente, sondern auch mit einer weiteren angrenzenden Komponente verbinden zu können, können an wenigstens drei Schmalseiten der Einzelmodule wenigstens ein Nutprofil und/oder wenigstens ein Federprofil vorgesehen sein. Bei der dritten Schmalseite handelt es sich vorzugsweise um eine kürzere Schmalseite.

Bei einer ersten bevorzugten Ausgestaltung des Systems ist vorgesehen, dass das Nutprofil zwischen der ersten Stellung und der zweiten Stellung gegenüber dem Federprofil um ca. 180° gedreht ist. Die Drehachse kann das Einzelmodul, vorzugsweise etwa mittig, durchdringen und senkrecht zum Nutprofil verlaufen. Infolge der Drehung des Einzelmoduls werden folglich Außen- und Innenseite bzw. Ober und Unterseite des Einzelmoduls vertauscht. So können je nach Drehung des Nutprofils in Bezug auf das Federprofil die beiden Einzelmodule in einer gemeinsamen Ebene oder über Eck miteinander verbunden werden. Dadurch ist eine einfache und schnelle Fertigung eines Kofferaufbaus möglich. Eine Drehung des Nutprofils in Bezug auf das Federprofil ist vorzugsweise gleichbedeutend mit einer Drehung des das Nutprofil aufweisenden Einzelmoduls gegenüber dem das Federprofil aufweisenden Einzelmodul. Hinzu kommt dann noch ein Kippen des das Nutprofil aufweisenden Einzelmoduls um etwa 90° gegenüber dem das Federprofil aufweisenden Einzelmodul, damit die beiden Einzelmodule in einer Stellung in einer Ebene und in einer anderen Stellung über Eck miteinander verbunden sind. Das Kippen des Einzelmoduls erfolgt dabei je nach Einzelmodul insbesondere um eine Achse parallel zum Nutprofil oder zum Federprofil. Das Drehen des jeweiligen Einzelmoduls erfolgt vorzugsweise um eine Achse senkrecht zu dieser Achse, also senkrecht zum Nutprofil bzw. zum Federprofil, und parallel zum jeweiligen Einzelmodul.

Das Nutprofil und das Federprofil weisen Anschlagflächen auf, die sowohl in der ersten Stellung als auch in der zweiten Stellung zusammenwirken. Dadurch können das Nutprofil und das Federprofil konstruktiv einfach ausgebildet werden. Außerdem kann eine große Anschlagfläche zwischen dem Nutprofil und dem Federprofil bereitgestellt werden.

Die Anschlagflächen des Nutprofils und des Federprofils sind etwa um 45° zur jeweiligen Paneelebene geneigt. Dabei können in der ersten und der zweiten Stellung gleiche oder unterschiedliche Anschlagflächen zusammenwirken. Die Einzelmodule bilden aufgrund des Winkels der Anschlagflächen von etwa 45° problemlos in der ersten Stellung einen Winkel von 180° und in der zweiten Stellung einen Winkel von 90° bzw. 270°.

Insbesondere wenn in der ersten Stellung und in der zweiten Stellung jeweils zwei unterschiedliche Anschlagflächenpaare der Einzelmodule aneinander anliegen, können die Anschlagflächen auch in einem Winkeln größer oder kleiner als 45° zur Ebene des entsprechenden Einzelmoduls geneigt sein. Dabei sind die Anschlagflächen, die in der ersten Stellung der Einzelmodule aneinander anliegen, vorzugsweise um etwa den gleichen Winkel zur Ebene des entsprechenden Einzelmoduls geneigt. Die Anschlagflächen, die in der zweiten Stellung der Einzelmodule aneinander anliegen, sind dagegen vorzugsweise um Winkel zur Ebene des entsprechenden Einzelmoduls geneigt, deren Summe einen Winkel von etwa 90° ergibt.

Damit das Nutprofil und das Federprofil einfacher ohne die Gefahr von Montagefehlern verbunden werden können, sind das Nutprofil und das Federprofil dazu ausgebildet, in der ersten Stellung und der zweiten Stellung selbstpositionierend miteinander verbunden zu werden. Dies wird besonders einfach dadurch realisiert, dass das Nutprofil und das Federprofil über eine Schnappverbindung miteinander verbunden werden. Es gibt dann eine Rückmeldung über das vorschriftsmäßige Schließen der Verbindung zwischen Nutprofil und Federprofil.

In einer weiter bevorzugten Ausgestaltung des Systems weist das Nutprofil außenseitig einen nach innen gerichteten Hakenabschnitt auf. Das Federprofil umfasst dabei vorzugsweise einen nach außen geöffneten Nutabschnitt, in den der Hakenabschnitt in der ersten Stellung formschlüssig eingreift. Es kommt auf diese Weise zu einem in der Ebene der miteinander verbundenen Einzelmodule hohe Auszugskräfte aufnehmenden Formschluss zwischen Nutprofil und Federprofil.

In der zweiten Stellung kann der Hakenabschnitt des Nutprofils das Federprofil an einer Außenseite teilweise umgreifen. So wird auch in der zweiten Stellung ein Formschluss parallel zur Ebene des das Nutprofil aufweisenden Einzelmoduls hergestellt.

Wenn das das Nutprofil aufweisende Einzelmodul eine äußere Decklage aufweist, kann deren Rand vorzugsweise in der ersten Stellung den Hakenabschnitt wenigstens bis in den Nutabschnitt des Federprofils hinein umgreifen. Dann ist die Kante der äußeren Decklage von außen nicht sichtbar. Dies hat optische Vorzüge und sorgt dafür, dass ein unbeabsichtigter Kontakt mit der ggf. scharfen Kante der äußeren Decklage vermieden wird.

Alternativ oder zusätzlich kann zur Erzielung der gleichen Vorteile das das Federprofil aufweisende Einzelmodul eine Decklage aufweisen, dessen Rand in den Nutabschnitt eingreift.

Etwa um die beiden Einzelmodule in der ersten Stellung gegeneinander abdichten zu können und ein Eindringen von Feuchtigkeit und Schmutz in die Verbindung zwischen dem Nutprofil und dem Federprofil zu verhindern, können sich die Außenseiten der Decklagen der beiden Einzelmodule unter Ausbildung eines Spalts einander gegenüberstehen. In den Spalt kann dann ein Dichtungselement eingebracht werden. Bevorzugt sind die Außenseiten der einander zugewandten Ränder der beiden äußeren Decklagen der Einzelmodule in der ersten Stellung unter Ausbildung eines Spalts einander gegenüberstehend angeordnet.

Alternativ oder zusätzlich kann der Nutabschnitt des Federprofils in der zweiten Stellung wenigstens teilweise nach innen geöffnet sein. In den nach innen, d.h. zum Innenraum des Kofferaufbaus, geöffneten Nutabschnitt kann dann eine Dichtung eingebracht werden. Es kann aber auch ein Fremdelement, etwa in Form einer Profilleiste oder eines Verbindungselements, in den Nutabschnitt eingebracht werden. An dem Verbindungselement kann beispielsweise eine Leitung oder dergleichen angebracht sein. Das Verbindungselement kann auch der Ladungssicherung dienen.

Alternativ oder zusätzlich kann das Federprofil eine Aufnahme aufweisen, in der ein Fremdelement befestigt werden kann. In der ersten Stellung ist die Aufnahme von der Innenseite des Kofferaufbaus und in der zweiten Stellung von der Außenseite des Kofferaufbaus zugänglich. In der ersten Stellung kann beispielsweise ein Verbindungselement zur Aufnahme einer Leitung oder einer Ladungssicherung in der Aufnahme montiert sein. Insbesondere in der zweiten Stellung kann in die Aufnahme eine Profilleiste eingebracht sein. Diese ist beispielsweise aus Gummi oder einem anderen Material gefertigt und dient zur Abdichtung der Verbindung und/oder als Kantenschutz.

Zur Erhöhung der Stabilität der Verbindung der Einzelmodule sind das Nutprofil und/oder das Federprofil im Wesentlichen als geschlossenes Profil ausgebildet.

Damit das Nutprofil und das Federprofil zur Vermeidung eines Ausziehens der Verbindung in einfacher Weise noch mit einer Schraubverbindung gesichert werden können, weisen das Nutprofil und/oder das Federprofil wenigstens eine Öffnung auf, welche ein Verschrauben von Nutprofil und Federprofil, vorzugsweise der zusammenwirkenden Anschlagflächen, ermöglicht. Alternativ oder zusätzlich kann die wenigstens eine Öffnung auch zum Befestigen bzw. Einrasten von wenigstens einer Ladungssicherungsschiene und/oder wenigstens einem Ladungssicherungselement, wie einem Spanngurt oder dergleichen, dienen.

Aus Kostengründen bietet es sich im Übrigen an, wenn das Federprofil und/oder das Nutprofil als Rollprofil ausgebildet sind.

Die Erfindung wird nachträglich anhand einer lediglich ein Ausführungsbeispiel darstellenden Zeichnung näher erläutert. In der Zeichnung zeigt
- Fig. 1: ein Nutzfahrzeug mit einem Kofferaufbau umfassend das erfindungsgemäße System,
- Fig. 2: zwei Schmalseiten zweier unterschiedlicher Einzelmodule des Systems mit einem Nutprofil und einem Federprofil in einer Schnittansicht,
- Fig. 3: die beiden Schmalseiten aus Fig. 2 in einem verbundenen Zustand gemäß der ersten Stellung in einer Schnittansicht und
- Fig. 4: die beiden Schmalseiten aus Fig. 2 in einem verbundenen Zustand gemäß der zweiten Stellung in einer Schnittansicht.

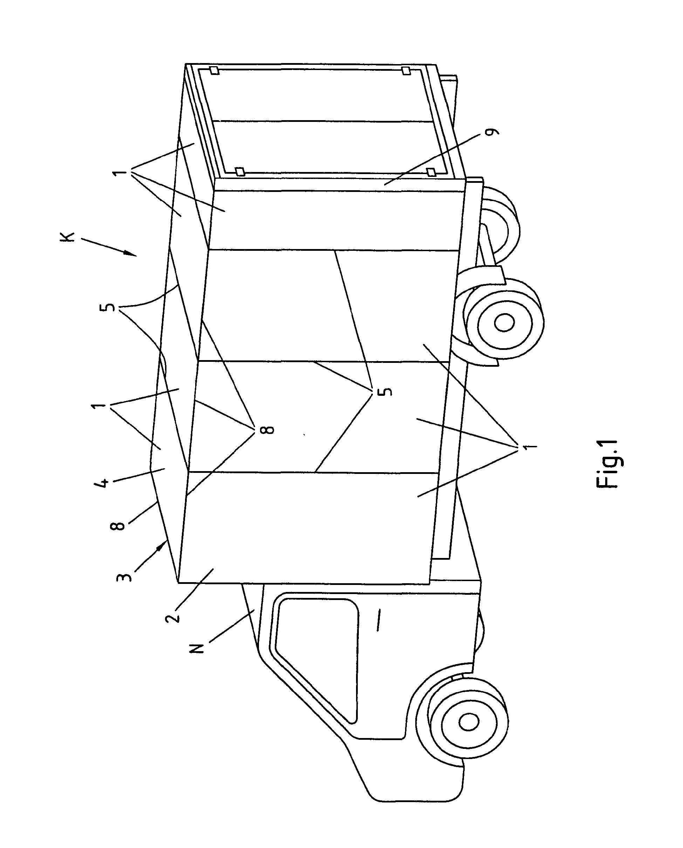

In der Fig. 1 ist ein Nutzfahrzeug N in Form eines Transporters mit einem zulässigen Gesamtgewicht zwischen 3,5 Tonnen und 7,5 Tonnen dargestellt. Das Nutzfahrzeug N trägt einen Kofferaufbau K, der unter Verwendung eines Systems von mehreren Einzelmodulen 1 gefertigt ist. Bei dem dargestellten und insoweit bevorzugten Nutzfahrzeug N sind die Komponenten in Form von Seitenwandpaneelen 2, Stirnwandpaneel 3 und Dachpaneel 4 jeweils aus einer Mehrzahl von Einzelmodulen 1 zusammengesetzt.

Die Einzelmodule 1 jeder Komponente 2,3,4 sind dabei an ihren benachbarten langen Schmalseiten 5 miteinander verbunden. Dazu sind den benachbarten langen Schmalseiten 5 korrespondierende Nutprofile 6 und Federprofile 7 vorgesehen. Die Seitenwandpaneele 2 sind ferner an entsprechenden langen Schmalseiten 5 der endständigen Einzelmodule 1 über Eck mit den langen Schmalseiten 5 endständiger Einzelmodule 1 des Stirnwandpaneels 3 verbunden. Die Einzelmodule 1 des Stirnwandpaneels 3 sind darüber hinaus über obere kurze Schmalseiten 8 mit einer langen Schmalseite 5 des vorderen Einzelmoduls 1 des Dachpaneels 4 verbunden. Die oberen kurzen Schmalseiten 5 der Einzelmodule 1 der Seitenwandpaneele 2 sind über Eck mit entsprechenden kurzen Schmalseiten 8 der Einzelmodule 1 des Dachpaneels 4 verbunden. Jede dieser Verbindungen wird durch eine Nut-/Feder-Verbindung gebildet. Dafür sind an den entsprechenden kurzen und langen Schmalseiten 5,8 der Einzelmodule 1 Nutprofile 6 und Federprofile 7 vorgesehen.

Bedarfsweise können auch an den unteren kurzen Schmalseiten der Einzelmodule 1 des Stirnwandpaneels 3 und/oder der Seitenwandpaneele 2 ein Nutprofil und/oder ein Federprofil vorgesehen sein. Diese können dann gleichartig zu den übrigen Nutprofilen 6 und/oder Federprofilen 7 der Einzelmodule 1 ausgebildet sein.

Beim dargestellten und insoweit bevorzugten Nutzfahrzeug N sind die hinteren lagen Schmalseiten 5 der Seitenwandpaneele 2 und des Dachpaneels 4 ebenfalls mit Nutprofilen 6 und/oder Federprofilen 7 versehen, die mit einem korrespondierenden Rückwandrahmen 9 verbunden sind. Die Einzelmodule 1 jeder Komponente 2,3,4 sind gleichartig ausgebildet und unterscheiden sich lediglich hinsichtlich ihrer Breite voneinander. Insbesondere sind die Einzelmodule 1 der Seitenwandpaneele 2 und des Stirnwandpaneels 3 gleichartig ausgebildet. In gleicher Weise können auch die Einzelmodule des Dachpaneels 4 ausgebildet sein.

Beim dargestellten Nutzfahrzeug N sind die Einzelmodule 1 des Dachpaneels 4 unterschiedlich zu den Einzelmodulen 1 der Seitenwandpaneele 2 und des Stirnwandpaneels 3 ausgebildet. Die Einzelmodule 1 des Dachpaneels 4 weisen an dem Paar einander gegenüberliegender kurzer Schmalseiten 8 gleichartige Nutprofile 6 auf. Dies ist bei den Einzelmodulen 1 der Seitenwandpaneele 2 und des Stirnwandpaneels 3 beim dargestellten Kofferaufbau K nicht der Fall. Die Nutprofile 6 an den kurzen Schmalseiten 8 der Einzelmodule 1 des Dachpaneels 4 sind dabei mit dem einen Nutprofil 6 einer langen Schmalseite 5 derselben Einzelkomponente 1 gleichartig ausgebildet.

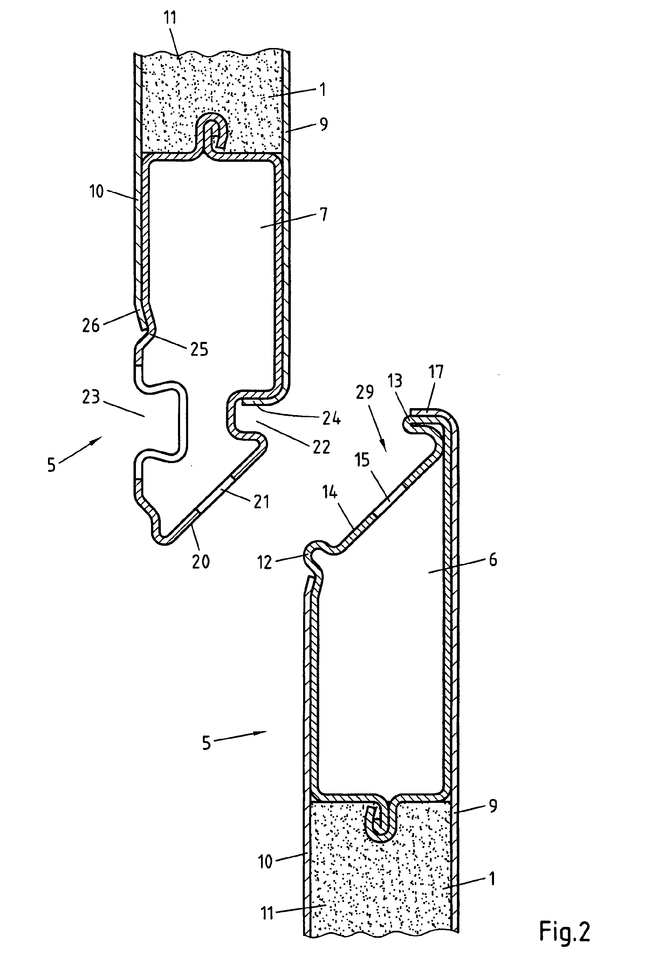

In der Fig. 2 ist ein Schnitt durch zwei Einzelmodule 1 des Systems dargestellt. Die beiden benachbarten langen Schmalseiten 5 weisen ein Nutprofil 6 und ein Federprofil 7 auf, so dass gleichartige Einzelmodule 1 an den langen Schmalseiten 5 miteinander etwa zu einer Komponente 2,3,4 verbunden werden können.

Das Nutprofil 6 und das Federprofil 7 sind jeweils aus einem Blechmaterial durch Rollen geformt. Bei dem Nutprofil 6 und dem Federprofil 7 handelt es sich jeweils um ein geschlossenes Profil. Jedes Einzelmodul 1 weist zwei Decklagen 9,10 auf, zwischen denen eine Kernschicht 11 aus einem geschäumten Polyurethanmaterial vorgesehen ist. Nicht im Einzelnen dargestellt ist, dass die Deckenlagen 9,10 jeweils mehrschichtig aufgebaut sind. Die Decklagen 9,10 sind im Wesentlichen aus Kunststoff gebildet, wobei eine Verbundschicht aus Fasern und einem thermoplastischen Kunststoff vorgesehen ist.

Das Nutprofil 6 weist eine äußere Wulst 12 und einen der Wulst 12 gegenüber angeordneten äußeren Hakenabschnitt 13 auf. Zwischen der Wulst 12 und dem äußeren Hakenabschnitt 13 ist eine Anschlagfläche 14 zur Verbindung mit dem Federprofil 7 vorgesehen. Die Anschlagfläche 14 erstreckt sich beim dargestellten und insoweit bevorzugten System über die gesamte Länge der entsprechenden langen Schmalseite 5. Die Anschlagfläche 14 ist ferner um etwa 45° zur Ebene des Einzelmoduls 1 geneigt. In der Anschlagfläche 14 sind über deren Längserstreckung mehrere Bohrungen 15 zur Herstellung einer Schraubverbindung 16 zwischen dem Nutprofil 6 und dem Federprofil 7 vorgesehen.

Die Decklagen 9,10 überdecken das Nutprofil 6 wenigstens teilweise. Eine der Decklagen 9 ist um die Außenseite des Hakenabschnitts 13 herumgezogen. Der um den Hakenabschnitt 13 herumgezogene Rand 17 der Decklage 9 erstreckt sich im Wesentlichen rechtwinklig zur Ebene des Einzelmoduls 1. Die andere Decklage 10 endet kurz vor dem die Anschlagfläche 14 begrenzenden Wulst 12.

Das Federprofil 7 weist ebenfalls eine um etwa 45° gegenüber dem entsprechenden Einzelmodul 1 geneigte Anschlagfläche 20 auf, die sich ebenso wie bei dem Nutprofil 6 über die gesamte Längserstreckung des Federprofils 7 erstreckt. Korrespondierend zu den Bohrungen 15 des Nutprofils 6 sind auch im Federprofil 7 Bohrungen 21 vorgesehen, die der Schraubverbindung 16 zwischen den Anschlagflächen 14,20 von Nutprofil 6 und Federprofil 7 dienen. Auf der der gegenüberliegenden Schmalseite zugewandten Seite der Anschlagfläche 20 weist des Federprofil 7 einen Nutabschnitt 22 und eine Aufnahme 23 auf. Der Nutabschnitt 22 und die Aufnahme 23 sind zur jeweiligen Außenseite des Einzelmoduls 1 geöffnet. Beim dargestellten und insoweit bevorzugten System sind der Nutabschnitt 22 und die Aufnahme 23 einander gegenüberliegend angeordnet.

Die dem Nutabschnitt 22 zugeordnete Decklage 9 des entsprechenden Einzelmoduls 1 erstreckt sich bis in den Nutabschnitt 22 hinein. Dabei ist die Decklage 9 um die innere Nutflanke des Nutabschnitts 22 herum nach innen gezogen. Der entsprechende nach innen um die innere Nutflanke des Nutabschnitts 22 herumgezogene Rand 24 der Decklage 9 erstreckt sich im Wesentlichen senkrecht zur Ebene des entsprechenden Einzelmoduls 1. Die auf der anderen Seite des Einzelmoduls 1 vorgesehene Decklage 10 endet vor der Aufnahme 23 in einer hierfür vorgesehenen Sicke 25. Im Bereich der Sicke 25 ist der Rand 26 dieser Decklage 10 leicht nach innen umgebogen.

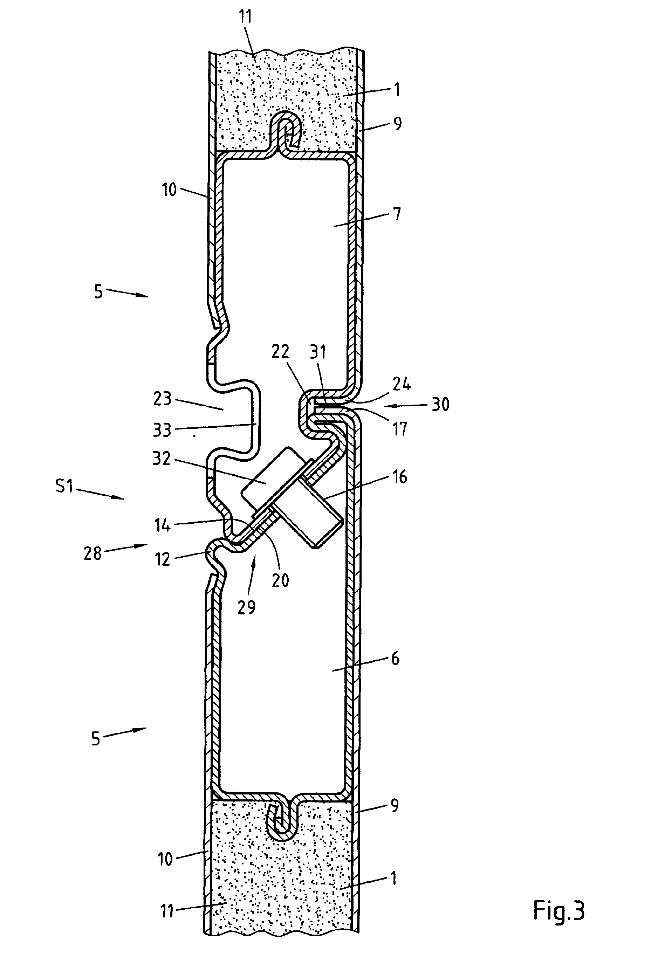

In der Fig. 3 ist eine Verbindung 28 zweier Einzelmodule 1 über jeweils ein Nutprofil 6 und ein Federprofil 7 dargestellt. Die beiden Einzelmodule 1 nehmen dabei eine erste Stellung S1 ein, in der die beiden Einzelmodule 1 parallel zueinander ausgerichtet sind. Die beiden in der Fig. 3 dargestellten Einzelmodule 1 sind in einer gemeinsamen Ebene angeordnet, welche die Ebene der gemeinsamen Komponente 2,3,4 darstellt. Die Verbindung 28 stellt eine Verbindung zweier Einzelmodule 1 ein und derselben Komponente 2,3,4 dar.

Das Federprofil 7 ist in die Nut 29 des Nutprofils 6 zwischen dem Wulst 12 und dem Hakenabschnitt 13 aufgenommen. Gefügt werden das Federprofil 7 und das Nutprofil 6 durch eine Schwenkbewegung und/oder eine Bewegung senkrecht zur gemeinsamen Ebene der beiden Einzelmodule 1. Das Federprofil 7 wird in Form einer Schnappverbindung oder einer Rastverbindung im Nutprofil 6 aufgenommen, wodurch eine automatische Zentrierung des Federprofils 7 gegenüber dem Nutprofil 6 erreicht wird.

Der Hakenabschnitt 13 des Nutprofils 6 greift von außen in den Nutabschnitt 22 des Federprofils 7 ein, und zwar formschlüssig. Der Formschluss wirkt einem Ausziehen von Federprofil 7 und Nutprofil 6 parallel zu der gemeinsamen Ebene, d.h. parallel zu den beiden Einzelmodulen 1, entgegen. Mit dem Hakenabschnitt 13 des Nutprofils 6 gelangt auch der Rand 17 der entsprechenden Decklage 9 in den Nutabschnitt 22. Dabei ist die Außenseite des in den Nutabschnitt 22 eindringenden Randes 17 der Decklage 9 des das Nutprofil 6 aufweisenden Einzelmoduls 1 durch einen Spalt 30 von der Außenseite des ebenfalls in den Nutabschnitt 22 eindringenden Randes 24 der Decklage 9 des das Federprofil 7 aufweisenden Einzelmoduls 1 beabstandet. Dieser Spalt 30 ist durch ein Dichtmittel 31 verschlossen. Das Dichtmittel 31 erstreckt sich über die gesamte Länge der Verbindung 28 zwischen dem Nutprofil 6 und dem Federprofil 7. Die entsprechende Seite der Einzelmodule 1 entspricht vorzugsweise der Außenseite des Kofferaufbaus K.

Auf der Innenseite des Kofferaufbaus K ist dann die Aufnahme 23 vorgesehen, in die Fremdelemente eingebracht werden können. Die Fremdelemente können der Aufnahme von Leitungen, von Elementen zur Ladungssicherung, wie Spanngurte, und/oder von Doppelstockschienen, dienen. Doppelstockschienen dienen der Aufnahme von horizontalen Trägern, auf denen Güter in einer erhöhten Ebene abgestellt werden können.

Eine dauerhafte Verbindung 28 zwischen dem Nutprofil 6 und dem Federprofil 7 wird durch eine Schraubverbindung 16 erreicht. Dabei sind die Anschlagflächen 14,20 von Nutprofil 6 und Federprofil 7 miteinander verschraubt. Die Schauben 32 werden beim dargestellten System von der Seite des Federprofils 7 eingebracht, wozu das Federprofil 7 in der Aufnahme 23 entsprechende Öffnungen 33 aufweist, durch die sich die Schrauben 32 anziehen lassen. Durch das Anziehen der Schrauben 32 werden die Anschlagflächen 14,20 von Nutprofil 6 und Federprofil 7 aufeinandergepresst. Die Öffnungen 23 können jedoch alternativ oder zusätzlich auch zum Befestigen bzw. Einrasten von wenigstens einer Ladungssicherungsschiene und/oder wenigstens einem Ladungssicherungselement, wie einem Spanngurt oder dergleichen, dienen.

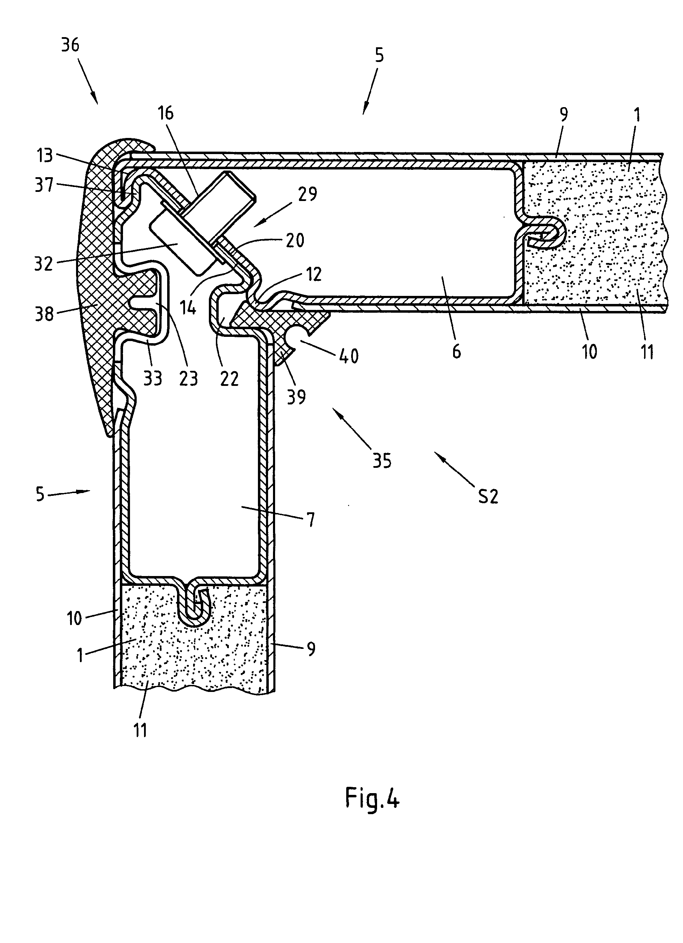

In der Fig. 4 ist eine alternative Verbindung 35 zweier Einzelmodule 1 über jeweils ein Nutprofil 6 und ein Federprofil 7 dargestellt. Die beiden Einzelmodule 1 nehmen dabei eine zweite Stellung S2 ein, in der die beiden Einzelmodule 1 im Wesentlichen senkrecht zueinander ausgerichtet sind. Die in der Fig. 4 dargestellte Verbindung 35 ist eine Verbindung zwischen Einzelmodulen 1 zweier benachbarter Komponenten 2,3,4. Die Einzelmodule 1 sind nämlich unter Ausbildung einer Kante 36 des Kofferaufbaus K über Eck miteinander verbunden. Bei den im Schnitt dargestellten langen Schmalseiten 5 der Einzelmodule 1 handelt es sich um dieselben Schmalseiten 5 derselben Einzelmodule 1 wie in Fig. 3. Es könnte sich jedoch auch um kurze Schmalseiten 8 derselben oder anderer Einzelmodule 1 handeln.

Das Federprofil 7 ist ähnlich wie in der Fig. 3 dargestellt in der Nut 29 zwischen der Wulst 12 und dem Hakenabschnitt 13 des Nutprofils 6 aufgenommen. Im Unterschied dazu sind die beiden Profile 6,7 jedoch in Bezug auf das jeweils andere Profil 6,7 um etwa 180° gedreht und zudem um etwa 90° gekippt. Dabei ist das entsprechende Einzelmodul 1 um eine Achse parallel zum entsprechenden Nutprofil 6 und/oder Federprofil 7 gekippt und um eine Achse senkrecht zum entsprechenden Nutprofil 6 und/oder Federprofil 7 sowie parallel zum entsprechenden Einzelmodul 1 gedreht. Auch in dieser zweiten Stellung S2 der Einzelmodule 1 bildet das Federprofil 7 beim Eingreifen in die Nut 29 des Nutprofils 6 eine Schnappverbindung bzw. Rastverbindung. Das Nutprofil 6 und das Federprofil 7 können durch eine Schwenkbewegung gefügt werden oder durch eine Bewegung, die im Wesentlichen parallel zu dem das Federprofil 7 aufweisenden Einzelmodul 1 ist.

In der in der Fig. 4 dargestellten zweiten Stellung S2 der Einzelmodule 1 umgreift der Hakenabschnitt 13 des Nutprofils 6 einen äußeren Bereich 37 des Federprofils 7. Auf diese Weise wird ein Formschluss in einer Auszugsrichtung parallel zu dem das Nutprofil 6 aufweisenden Einzelmodul 1 erhalten. Der entsprechende vom Hakenabschnitt 13 des Nutprofils 6 umgriffene äußere Bereich 37 des Federprofils 7 ist etwas nach innen zurückversetzt, so dass die beiden Profile 6,7 im entsprechenden Eckbereich bündig miteinander abschließen. Zusätzlich zu dem Formschluss werden das Nutprofil 6 und das Federprofil 7 noch durch eine Schraubverbindung 16 dauerhaft aber dennoch lösbar miteinander verbunden. Die entsprechenden sich entlang der Verbindung 35 verteilenden Schrauben 32 sind durch Öffnungen 33 im Federprofil 7 eingeführt und angezogen. Beim dargestellten Federprofil 7 sind die Öffnungen 33 in der Aufnahme 23 vorgesehen.

In der zweiten Stellung S2 befindet sich die Aufnahme 23 des Federprofils 7 auf der Außenseite bezogen auf den Kofferaufbau K. Nicht nur deshalb ist beim dargestellten und insoweit bevorzugten Kofferaufbau K in der Aufnahme 23 ein Gummiprofil 38 gehalten, das gleichzeitig als Dichtungselement und Kantenschutz dient. Das Gummiprofil 38 erstreckt sich über die gesamte durch das Nutprofil 6 und das Federprofil 7 gebildete Kante 36 des Kofferaufbaus K. Das Gummiprofil 38 erstreckt sich dabei von der Decklage 9 des das Nutprofil 6 aufweisenden Einzelmoduls 1 bis zur Decklage 10 des das Federprofil 7 aufweisenden Einzelmoduls 1.

In dem Nutabschnitt 22 des Federprofils 7, der in der zweiten Stellung S2 zur Innenseite des Kofferaufbaus K geöffnet ist, befindet sich ein Dichtungsprofil 39, das eine Nut 40 zur Aufnahme einer Leitung oder dergleichen umfasst.

## Patentansprüche

1. System mit wenigstens zwei Einzelmodulen (1) zur Bildung eines Kofferaufbaus (K) eines Nutzfahrzeugs (N), insbesondere eines Transporters, eines Lastkraftwagens, eines Anhängers und/oder eines Aufliegers,
wobei an einer Schmalseite (5,8) eines ersten Einzelmoduls (1) ein Nutprofil (6) vorgesehen ist, wobei an einer Schmalseite (5,8) eines zweiten Einzelmoduls (1) ein Federprofil (7) vorgesehen ist, wobei das Nutprofil (6) und das Federprofil (7) zum formschlüssigen Verbinden miteinander in einer ersten Stellung (S1) vorgesehen sind, in der das erste Einzelmodul (1) und das zweite Einzelmodul (1) im Wesentlichen parallel zueinander ausgerichtet sind und wobei das Nutprofil (6) und das Federprofil (7) zum formschlüssigen Verbinden in einer zweiten Stellung (S2) vorgesehen sind, in der das erste Einzelmodul (1) und das zweite Einzelmodul (1) im Wesentlichen senkrecht zueinander ausgerichtet sind, **dadurch gekennzeichnet, dass**
das Nutprofil (6) am Nutgrund und das Federprofil (7) an dem dem Nutgrund zugewandten Abschnitt etwa um 45° zur Ebene des jeweiligen Einzelmoduls (1) geneigte Anschlagflächen (14,20) aufweisen, die in der ersten Stellung (S1) und der zweiten Stellung (S2) zusammenwirken und dass das Nutprofil (6) und das Federprofil (7) dazu ausgebildet sind, in der ersten Stellung (S1) und der zweiten Stellung (S2) über eine Schnappverbindung selbstpositionierend miteinander verbunden zu werden.

2. System nach Anspruch 1,
**dadurch gekennzeichnet, dass**
das Nutprofil (6) zwischen der ersten Stellung (S1) und der zweiten Stellung (S2) gegenüber dem Federprofil (7) um ca. 180° gedreht ist.

3. System nach Anspruch 1 oder 2,
**dadurch gekennzeichnet, dass**
das Nutprofil (6) außenseitig einen nach innen gerichteten Hakenabschnitt (13) aufweist, dass das Federprofil (7) einen Nutabschnitt (22) aufweist und dass der Hakenabschnitt (13) in der ersten Stellung (S1) formschlüssig in den nach außen geöffneten Nutabschnitt (22) eingreift.

4. System nach Anspruch 3,
**dadurch gekennzeichnet, dass**
das Einzelmodul (1) des Nutprofils (6) eine Decklage (9) aufweist und dass der Rand (17) der Decklage (9) in der ersten Stellung (S1) den Hakenabschnitt (13) wenigstens bis in den Nutabschnitt (22) des Federprofils (7) hinein umgreift.

5. System nach Anspruch 3 oder 4,
**dadurch gekennzeichnet, dass**
das Einzelmodul (1) des Federprofils (7) eine Decklage (9) aufweist und dass der Rand (24) der Decklage (9) in den Nutabschnitt (22) eingreift.

6. System nach einem der Ansprüche 1 bis 5,
**dadurch gekennzeichnet, dass**
in der ersten Stellung (S1) die außenseitigen Decklagen (9) des ersten Einzelmoduls (1) und des zweiten Einzelmoduls (1) einander unter Ausbildung eines Spalts (30) gegenüberstehen.

7. System nach einem der Ansprüche 3 bis 6,
**dadurch gekennzeichnet, dass**
der Nutabschnitt (22) in der zweiten Stellung (S2) wenigstens teilweise nach innen geöffnet ist.

8. System nach einem der Ansprüche 3 bis 7,
**dadurch gekennzeichnet, dass**
der in der zweiten Stellung (S2) wenigstens teilweise nach innen geöffnete Nutabschnitt (22) zur Befestigung eines Fremdelements, insbesondere einer Profilleiste oder eines Dichtungsprofils (39), ausgebildet ist.

9. System nach einem der Ansprüche 1 bis 9,
**dadurch gekennzeichnet, dass**
das Federprofil (7) eine nach innen geöffnete Aufnahme (23) zur Befestigung eines Fremdelements, insbesondere einer Profilleiste (38), aufweist.

10. System nach einem der Ansprüche 1 bis 9,
**dadurch gekennzeichnet, dass**
das Nutprofil (6) und/oder das Federprofil (7) im Wesentlichen als geschlossenes Profil ausgebildet sind.

11. System nach einem der Ansprüche 1 bis 10,
**dadurch gekennzeichnet, dass**
das Nutprofil (6) und/oder das Federprofil (7) wenigstens eine Öffnung (31) aufweisen, welche ein Verschrauben von Nutprofil (6) und Federprofil (7), vorzugsweise der zusammenwirkenden Anschlagflächen (14,20), ermöglicht.

12. System nach einem der Ansprüche 1 bis 11,
**dadurch gekennzeichnet, dass**
das Federprofil (7) und/oder das Nutprofil (6) als Rollprofil ausgebildet sind.

## Claims

1. System having at least two modules (1) to form a box body (K) for a commercial vehicle (N), in particular a transporter, a lorry, a trailer and/or a semitrailer, whereby a groove profile (6) is provided on a narrow face (5, 8) of a first individual module (1), whereby a tongue profile (7) is provided on a narrow face (5, 8) of a second individual profile (1), whereby the groove profile (6) and the tongue profile (7) are provided for positive-locking connection with one another in a first position (S1) in which the first individual module (1) and the second individual module (1) are aligned essentially in parallel to one another and whereby the groove profile (6) and the tongue profile (7) are provided for positive-locking connection with one another in a second position (S2) in which the first individual module (1) and the second individual module (1) are aligned in essentially vertically to one another,
**characterised in that**
the groove profile (6) and the tongue profile (7) have stop surfaces (14, 20) angled at around 45° to the plane of the respective individual module (1) on the base of the groove and on the section which faces towards the base of the groove respectively, which stop surfaces interact in the first position (S1) and the second position (S2) and **in that** the groove profile (6) and the tongue profile (7) are designed to be connected to one another in a self-positioning manner by means of a snap connection in the first position (S1) and in the second position (S2).

2. System according to Claim 1, **characterised in that** the groove profile (6) is rotated about approximately 180° relative to the tongue profile (7) between the first position (S1) and the second position (S2).

3. System according to Claim 1 or 2, **characterised in that** the outside of the groove profile (6) has an inward-looking hook section (13), and **in that** the tongue profile (7) has a groove section (22) and **in that** the hook section (13) meshes positively with the groove section (22), which is open in an outwards direction, in the first position (S1).

4. System according to Claim 3, **characterised in that** the individual module (1) of the groove profile (6) has a top layer (9), and **in that** the edge (17) of the top layer (9) surrounds the hook section (13) at least into the groove section (22) of the tongue profile (7) in the first position (S1).

5. System according to Claim 3 or 4, **characterised in that** the individual module (1) of the tongue profile (7) has a top layer (9), and **in that** the edge (24) of the top layer (9) meshes with the groove section (22).

6. System according to any one of Claims 1 to 5, **characterised in that** in the first position (S1) the top layers (9) of the first individual module (1) and the second module (1) which are on the outside are opposite one another, forming a slit (30).

7. System according to any one of Claims 3 to 6, **characterised in that** the groove section (22) is at least partially open in an inwards direction in the second position (S2).

8. System according to any one of Claims 3 to 7, **characterised in that** the groove section (22) which is at least partially open in an inwards direction in the section position (S2) is designed to attach a foreign element, in particular a moulding or a sealing profile (39).

9. System according to any one of Claims 1 to 9 [sic], **characterised in that** the tongue profile (7) has a recess (23) which is open in an inwards direction to attach a foreign element, in particular a moulding (38).

10. System according to any one of Claims 1 to 9, **characterised in that** the groove profile (6) and/or the tongue profile (7) are essentially formed as a closed profile.

11. System according to any one of Claims 1 to 10, **characterised in that** the groove profile (6) and/or the tongue profile (7) have at least one opening (31) which enables a screwing together of the groove profile (6) and the tongue profile (7), preferably of the interacting stop surfaces (14, 20).

12. System according to any one of Claims 1 to 11, **characterised in that** the tongue profile (7) and/or the groove profile are formed as a rolled profile.

## Revendications

1. Système comportant au moins deux modules individuels (1) pour la constitution d'une structure de coffre (K) d'un véhicule utilitaire (N), en particulier d'un transporteur, d'un camion, d'une remorque et/ou d'un semi-remorque, un profilé rainuré (6) étant prévu sur un côté étroit (5, 8) d'un premier module individuel (1), un profilé languette (7) étant prévu sur un côté étroit (5, 8) d'un second module individuel (1), le profilé rainuré (6) et le profilé languette (7) étant prévus pour établir une correspondance en correspondance géométrique entre eux dans une première position (S1) dans laquelle le premier module individuel (1) et le second module individuel (1) sont orientés sensiblement à la parallèle l'un de l'autre, le profilé rainuré (6) et le profilé languette (7) étant conçus pour se raccorder par correspondance géométrique dans une seconde position (S2) dans laquelle le premier module individuel (1) et le second module individuel (2) sont orientés sensiblement à la perpendiculaire l'un de l'autre,
**caractérisé en ce que**
le profilé rainuré (6) présente au niveau de sa base de rainure et le profilé languette (7) au niveau de la section tournée vers la rainure de base des surfaces de butée (14, 20) inclinées approximativement de 45° par rapport au plan du module individuel respectif (1) et qui coopèrent dans la première position (S1) et la seconde position (S2) et que le profilé rainuré (6) et le profilé languette (7) sont conçus pour être reliés entre eux dans la première position (S1) et dans la seconde position (S2) en auto-positionnement par une connexion à encliquetage.

2. Système selon la revendication 1,
**caractérisé en ce que**
le profilé rainuré (6) est tourné d'environ 180° entre la première position (S1) et la seconde position (S2) par rapport au profilé languette (7).

3. Système selon la revendication 1 ou 2,
**caractérisé en ce que**
le profilé rainuré (6) présente sur son extérieur une section en crochet (13) dirigée vers l'intérieur, que le profilé languette (7) présente une section rainurée (22) et que la section en crochet (13), dans la première position (S1), s'engrène en correspondance géométrique dans la section rainurée ouverte vers l'extérieur (22).

4. Système selon la revendication 3,
**caractérisé en ce que**
le module individuel (1) du profilé rainuré (6) présente une couche de recouvrement (9) et que le bord (17) de la couche de recouvrement (9), dans la première position (S1), entoure la section en crochet (13) au moins jusque dans la section rainurée (22) du profilé languette (7).

5. Système selon la revendication 3 ou 4,
**caractérisé en ce que**
le module individuel (1) du profilé languette (7) présente une couche de recouvrement (9) et que le bord (24) de la couche de recouvrement (9) s'engrène dans la section rainurée (22).

6. Système selon une des revendications 1 à 5,
**caractérisé en ce que**
dans la première position (S1), les couches de recouvrement extérieures (9) du premier module individuel (1) et du second module individuel (1) se font face en formant un intervalle (30).

7. Système selon une des revendications 3 à 6,
**caractérisé en ce que** la section rainurée (22), dans la seconde position (S2), est ouverte au moins partiellement vers l'intérieur.

8. Système selon une des revendications 3 à 7,
**caractérisé en ce que**
la section rainurée (22) ouverte au moins partiellement vers l'intérieur dans la seconde position (S2) est conçue pour fixer un élément d'origine extérieure, en particulier une baguette profilée ou un profil d'étanchéité (39).

9. Système selon une des revendications 1 à 8,
**caractérisé en ce que**
le profilé languette (7) présente un support ouvert vers l'intérieur (23) pour fixer un élément d'origine extérieure, en particulier une baguette profilée (38).

10. Système selon une des revendications 1 à 9,
**caractérisé en ce que**
le profilé rainuré (6) et/ou le profilé languette (7) sont réalisés sensiblement sous forme de profilés fermés.

11. Système selon une des revendications 1 à 10,
**caractérisé en ce que** le profilé rainuré (6) et/ou le profilé languette (7) présentent au moins une ouverture (31) qui permet un vissage du profilé rainuré (6) et du profilé languette (7), de préférence des surfaces de butée coopérantes (14, 20).

12. Système selon une des revendications 1 à 11,
**caractérisé en ce que**
le profilé languette (7) et/ou le profilé rainuré (6) se présentent sous forme de profilés roulés.
